# Europäisches Patentamt
# European Patent Office
# Office européen des brevets

(19)

(11) Veröffentlichungsnummer: **0 149 979**
**B1**

(12)

# EUROPÄISCHE PATENTSCHRIFT

(45) Veröffentlichungstag der Patentschrift:
**04.11.87**

(21) Anmeldenummer: **84810653.0**

(22) Anmeldetag: **21.12.84**

(51) Int. Cl.⁴: **F 16 C 7/00**

(54) **Zug/Druck-Strebe aus faserverstärktem Kunststoff.**

(30) Priorität: **16.01.84 CH 174/84**

(43) Veröffentlichungstag der Anmeldung:
**31.07.85 Patentblatt 85/31**

(45) Bekanntmachung des Hinweises auf die Patenterteilung:
**04.11.87 Patentblatt 87/45**

(84) Benannte Vertragsstaaten:
**AT CH DE FR GB IT LI NL SE**

(56) Entgegenhaltungen:
**DE-A-2 710 275**
**FR-A-2 265 656**
**FR-A-2 284 819**
**FR-A-2 444 880**

(73) Patentinhaber: **CIBA- GEIGY AG, Klybeckstrasse 141, CH- 4002 Basel (CH)**

(72) Erfinder: **Lutz, Paul, Peter Ochsstrasse 17, CH- 4059 Basel (CH)**
Erfinder: **Voirol, Peter, Gorenmattstrasse 41, CH- 4102 Binningen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft eine Zug/Druck-Strebe gemäss dem Oberbegriff des Patentanspruchs 1.

Derartige, beispielsweise aus der DE-A-2 710 275 bekannte Verbund-Streben werden überall dort eingesetzt, wo es auf hohe Belastbarkeit bei gleichseitig möglichst niedrigem Gewicht ankommt, beispielsweise also etwa im Flugzeugbau oder dergleichen.

Bisherige Streben dieser Art bestehen in der Regel aus einem zylindrischen faserverstärkten Kunststoffrohr, an dessen Enden je ein Krafteinleitungselement in Form einer Metallglocke mit daran ausgebildetem Auge befestigt ist. Metallglocke und Rohrende weisen gegengleich geschäftete Ränder auf und sind über die durch die Schäftung entstandenen konischen Passflächen miteinander verklebt.

Bei diesen bekannten Streben sind also zwei so verschiedenartige Materialien wie faserverstärkter Kunststoff und Metall direkt miteinander verklebt. Dies führt zu unerwünschten Spannungen im Klebebereich, welche die Festigkeit der Verbindung erheblich beeinträchtigen. Ausserdem sind solche herkömmlichen Streben immer noch relativ schwer.

Durch die Erfindung sollen nun diese Schwierigkeiten beseitigt und eine Zug/Druck-Strebe der zur Rede stehenden Art dahingehend verbessert werden, dass eine Klebverbindung zwischen zwei so verschiedenartigen Materialien wie faserverstärkter Kunststoff und Metall und damit dadurch bedingte unerwünschte Spannungen im Krafteinleitungsbereich weitestgehend vermieden werden.

Die erfindungsgemässe Zug/Druck-Strebe, die diesen Anforderungen genügt, ist im Patentanspruch 1 beschrieben. Bevorzugte Ausführungsformen und Weiterbildungen ergeben sich aus den abhängigen Ansprüchen.

Im folgenden wird die Erfindung anhand eines in der Zeichnung dargestellten Ausführungsbeispiels näher erläutert. Es zeigen:

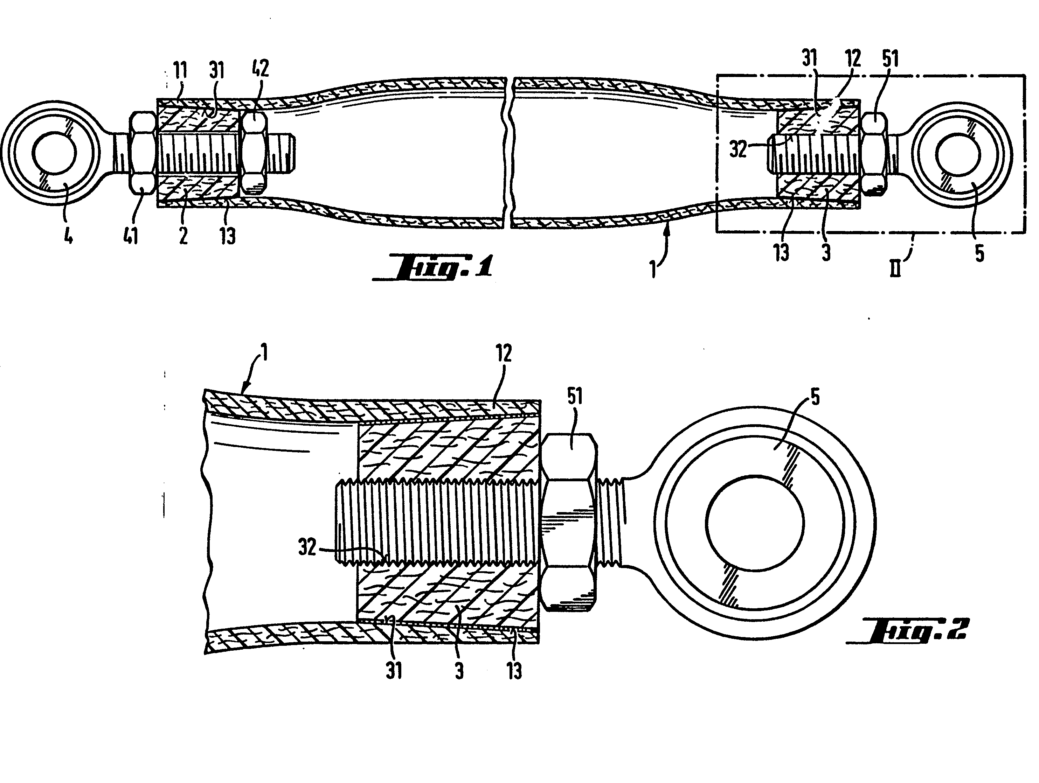

Fig. 1 einen Längsschnitt durch eine Strebe und

Fig. 2 ein Detail aus Fig. 1 in grösserer Darstellung.

Die Strebe umfasst darstellungsgemäss ein Rohr 1 aus faserverstärktem Kunststoff, zwei in die Rohrenden 11 und 12 eingeklebte hohlzylindrische Zapfen 2 und 3 und zwei in je einem der Zapfen verankerte Krafteinleitungselemente 4 und 5.

Das Kunststoffrohr 1 ist im Bereich seiner Enden flaschenhalsartig verjüngt. Die aneinander angrenzenden Klebeflächen 13 und 31 der Rohrenden 11 bzw. 12 und der Zapfen 2 bzw. 3 sind leicht konisch ausgebildet.

Der Zapfen 3 im in der Zeichnung rechten Rohrende 12 ist mit einem Innengewinde 32 versehen, in welches das ringschraubenartige Krafteinleitungselement 5 direkt eingeschraubt und mittels einer Mutter 51 gesichert ist.

Der linke Zapfen 2 weist kein Innengewinde auf. Die Verankerung des Krafteinleitungselements 4 erfolgt hier durch zwei Muttern 41 und 42. Die äussere Mutter 41 kann im Durchmesser auch so dimensioniert sein, dass sie über den Zapfen 2 hinausreicht und dadurch bei Druckbelastung den Schub direkt in das Kunststoffrohr 1 einleitet.

Das faserverstärkte Kunststoffrohr 1 ist herkömmlich ausgebildet und für den jeweiligen Belastungsfall dimensioniert. Als Verstärkungsfasern kommen vor allem hochsteife Fasern wie Kohlefasern oder Aramid-Fasern infrage. Die Hauptfaserorientierung ist parallel oder in einem relativ kleinen Winkel zur Rohrachse.

Aufgrund der verwendeten Verstärkungsfasern und der Faserstruktur ist das Rohr 1 extrem anisotrop. Um Spannungen infolge thermischer Beanspruchung im Klebbereich zu vermeiden sind die Zapfen 2 und 3 aus einem Material hergestellt, das in seinen Festigkeitseigenschaften und seinem thermischen Verhalten dem Rohrmaterial im Bereich der Rohrenden weitestgehend gleich kommt. Im Speziellen bestehen die Zapfen aus faserverstärktem Kunststoff, wobei die Verstärkungsfasern ebenfalls aus Kohle oder Aramid bestehen und im wesentlichen parallel zur Zapfenachse ausgerichtet sind.

Versuche haben gezeigt, dass eine erfindungsgemässe Zug/Druck-Strebe bei gleicher Nennlast wesentlich schwächer dimensioniert und damit leichter sein kann als herkömmliche Streben. Umgekehrt können erfindungsgemäss ausgebildete Streben wesentlich höheren Belastungen standhalten als gleich schwere konventionelle Streben.

**Patentansprüche**

1. Zug/Druck-Strebe mit einem mit Fasern hoher Steifigkeit verstärkten, extrem anisotropen Kunststoffrohr (1) und an den Enden (11, 12) desselben befestigten Krafteinleitungselementen (4, 5) aus Metall, wobei das Kunststoffrohr (1) an seinen beiden Enden (11, 12) flaschenhalsartig verjüngt ist, dadurch gekennzeichnet, dass in die Enden je ein im wesentlichen hohlzylindrischer Zapfen (2, 3) eingeklebt ist, der aus einem bezüglich seiner Steifigkeits- und thermischen Dehnungseigenschaften dem Kunststoffrohr (1) im Bereich seiner Enden zumindest annähernd vergleichbaren Material besteht, und dass die Krafteinleitungselemente (4, 5) in je einem Zapfen (2, 3) formschlüssig verankert sind.

2. Strebe nach Anspruch 1, dadurch gekennzeichnet, dass das Kunststoffrohr (1) im Bereich seiner Enden hauptsächlich im wesentlichen längsgerichtete Verstärkungsfasern aufweist, und dass die hohlzylindrischen Zapfen (2, 3) aus faserverstärktem Kunststoff mit im wesentlichen axial gerichteten Verstärkungsfasern bestehen.

3. Strebe nach Anspruch 2, dadurch gekennzeichnet, dass die Zapfen (2, 3) dieselbe Art von Verstärkungsfasern wie das Kunststoffrohr (1) aufweisen.

4. Strebe nach einem der Ansprüche 1-3, dadurch gekennzeichnet, dass ein Zapfen (3) mit einem Innengewinde (32) versehen ist, und dass ein Krafteinleitungselement direkt in den Zapfen (3) eingeschraubt ist.

5. Strebe nach einem der Ansprüche 1-4, dadurch gekennzeichnet, dass Zapfen (2, 3) und Kunststoffrohr (1) mit leicht konischen Klebflächen (13, 31) versehen sind.

## Claims

1. A tension-compression strut comprising a synthetic resin plastics tube (1) of extreme anisotropic nature, reinforced by fibers of high rigidity, and having two end zones (11, 12), force-introducing elements (4, 5) of metal, being connected each, respectively, with a different one of said end zones; each of said tubular end zones being of bottle-neck configuration and having a reduced diameter, characterized in that a substantially hollow cyclindrical plug (2, 3) is glued in each of said bottle neck-shaped end zones, each of said plugs being made of a material the rigidity and thermal expansibility of which is at least approximately similar with those of the said tube end zones; and in that each of the force-introducing elements (4, 5) in anchored, respectively, in one of said plugs (2, 3) by form locking.

2. The tension-compression strut of claim 1, characterized in that said plastics tube (1) comprises in its end zones mainly reinforcing fibers which are essentially longitudinally oriented, and the hollow cylindrical plugs (2, 3) consits of fiber-reinforced synthetic resin material having essentially axially oriented reinforcing fibers.

3. The tension-compression strut of claim 2, characterized in that said plugs (2, 3) contain the same kind of reinforcing fibers as said plastics tube (1).

4. The tension-compression strut according to anyone of claims 1-3, characterized in that a plug (3) has an internal threading (32), and a force-introducing element is screwed directly into the plug (3).

5. The tension-compression strut according to anyone of claims 1-4, characterized in that said plugs (2, 3) and said plastics tube (1) bear mutually fitting slightly conical gluing faces (13, 31).

## Revendications

1. Entretoise travaillant en traction et en compression, comprenant un tube (1) en matière synthétique extrêmement anisotrope et renforcée de fibres à haute résistance et des éléments d'application d'une force (4, 5) en métal fixés aux extrémités (11, 12) de celui-ci, le tube (1) en matière synthétique étant rétréci en forme de goulot de bouteille au niveau de ses deux extrémités (11, 12), caractérisée par le fait que dans chacune des extrémités est respectivement collé un tampon (2, 3) sensiblement cylindrique creux qui est réalisé en un matériau tout au moins approximativement comparable au tube (1) en matière plastique dans la zone de ses extrémités en ce qui concerne ses caractéristiques de résistance et de dilatation thermiques, et que les éléments d'application d'une force (4, 5) sont respectivement ancrés par voie mécanique dans un tampon (2, 3).

2. Entretoise selon la revendication 1, caractérisée par le fait que le tube (1) en matière synthétique, dans la zone de ses extrémités principalement, comporte des fibres de renforcement sensiblement dirigées dans le sens longitudinal et que les tampons cylindriques creux (2, 3) sont réalisés en matière synthétique renforcée de fibres avec fibres de renforcement dirigées sensiblement axialement.

3. Entretoise selon la revendication 2, caractérisée par le fait que les tampons (2, 3) comportent le même type de fibres de renforcement que le tube (1) en matière synthétique.

4. Entretoise selon l'une des revendications 1 - 3, caractérisée par le fait qu'un tampon (3) est muni d'un taraudage (32) et qu'un élément d'application d'une force est directement vissé dans le tampon (3).

5. Entretoise selon l'une des revendications 1 - 4; caractérisée par le fait que les tampons (2, 3) et le tube (1) en matière synthétique sont munis de surfaces de collage (13, 31) légèrement coniques.

Fig.1

Fig.2